# FASCICULE DE BREVET EUROPEEN

(11) **EP 0 509 893 B1**
(45) Date de publication et mention de la délivrance du brevet: **17.07.1996**
(21) Numéro de dépôt: 92401024.2
(22) Date de dépôt: 10.04.1992
(51) Int. Cl.: E01C 19/10, C08L 95/00

(54) **Procédé et dispositif de préparation d'enrobé bitumineux**
Verfahren und Vorrichtung zur Herstellung von bituminösem Mischgut
Process and apparatus for making bitumen coverings

(30) Priorité: 18.04.1991 FR 9104776
(43) Date de publication de la demande: 21.10.1992
(73) Titulaire: ISOVER SAINT-GOBAIN, F-92400 Courbevoie (FR)
(72) Inventeur: Basin, Gérard, F-60600 Clermont (FR); Le Breton, Patrick, F-60140 Liancourt (FR)
(74) Mandataire: Breton, Jean-Claude

(56) Documents cités:
- FR-A- 2 625 758
- US-A- 4 613 376

## Description

La présente invention concerne un procédé et un dispositif de préparation d'enrobé bitumineux.

Il est connu, entre autres, par la demande de brevet européen EP-A-0 455 553 intitulée "Mélange à base de bitume pour le revêtement des surfaces", de renforcer avec des fibres le bitume pour l'enrobage des inertes, matériaux minéraux de granulométries diverses, spécialement pour les revêtements routiers.

Les bitumes qui sont utilisés, entre autres, pour revêtir des surfaces en vue de les rendre étanches comme dans le cas des terrasses ou des parois verticales ou pour permettre le roulement des véhicules sur les routes, en particulier dans ce dernier cas lorsqu'il s'agit de constituer à la surface de la route une couche perméable à l'eau grâce à la technique des enrobés drainants, ne sont pratiquement jamais employés à l'état pur. En effet, leurs performances à basse et haute températures sont insuffisantes, seuls ils fourniraient des revêtements fragiles et cassants par temps de gel et qui, au contraire, deviendraient fluides sous l'effet de la chaleur.

Pour améliorer le comportement des bitumes et surtout avec les enrobés et élargir ainsi la gamme des températures où ils sont utilisables, on ajoute des substances diverses au bitume, telles que des fibres dont l'introduction est faite habituellement de manière discontinue.

Ainsi, le brevet européen EP-B-0 055 233 présente une technique discontinue pour préparer quelques tonnes d'enrobés en malaxant des graviers à température donnée avec de l'asphalte chargé de fibres minérales à une autre température précise.

Cette technique n'est adaptée qu'à la préparation de quantités réduites, de plus la précision qu'elle nécessite dans les pesées et dans la maîtrise des températures en rend l'utilisation délicate. Par ailleurs, aucun dispositif pour mettre en oeuvre la technique n'est proposé.

L'invention a pour but de permettre la préparation d'un mélange bitumineux destiné à l'enrobage des inertes pour permettre leur utilisation comme revêtement technique à performances améliorées et de fournir un dispositif qui permet la préparation d'enrobé comportant des inertes, du bitume et des fibres introduites de façon continue, que les centrales d'enrobage soient de type continu ou discontinu.

Un premier but est de proposer un procédé de préparation d'enrobé bitumineux évitant la détérioration des matériaux fibreux et permettant leur mélange homogène dans le bitume.

Ce premier but est atteint par le procédé de préparation d'enrobés bitumineux mélange de bitume, de fibres et de matériaux inertes dans lequel les fibres sont des fibres minérales à l'état divisé introduites dans du bitume liquide, dans lequel le bitume liquide est amené en un flux continu et où les fibres minérales sont également amenées en un flux continu à débit contrôlé pour se mélanger au bitume liquide.

Dans une variante, les fibres minérales sont sous forme de nodules et les nodules sont transportées pneumatiquement. Dans ce cas, de préférence, les fibres minérales sont fabriquées avec un micronaire au plus égal à 7 sous 5 grammes et ensimées avec un apprêt non-ionique et les nodules sont formés par passage des fibres dans une plaque à trous de 6 à 10 mm de dimension moyenne de manière à obtenir au moins 75 % des fibres avec une longueur inférieure à 0,5 mm. Avantageusement, l'ensimage est à base d'oxyde d'amine d'un acide gras et en particulier d'oxyde de diméthyl-alkylamine.

Un autre but est de proposer un dispositif d'alimentation continue des fibres permettant la mise en oeuvre du procédé d'enrobage en continu ou en discontinu.

Ce but est atteint par le fait que le dispositif de préparation d'enrobés bitumineux comportant un tambour tournant avec un brûleur et un dispositif de distribution de bitume liquide à flux continu comporte également un système de distribution de matériaux fibreux en flux continu et à débit contrôlé, les deux dispositifs débouchant dans une zone commune de manière que leur flux s'intersectent .

Selon une particularité, le dispositif de distribution de matériau fibreux est alimenté par un dispositif de décompactage de dosage et de transport pneumatique assurant la maîtrise du débit de matériau fibreux.

Selon une autre particularité, le dispositif de décompactage, de dosage et de transport pneumatique comporte un dispositif démotteur, une cardeuse, un doseur volumétrique et une source d'air sous pression.

Dans une variante, le dispositif démotteur comporte des pales composées d'un bras tranchant équipé à son extrémité d'un doigt perpendiculaire orientable.

Selon une autre particularité, les éléments constitutifs du dispositif de décompactage ont des vitesses réglables indépendamment et par ailleurs, en amont du dispositif de décompactage on a, dans une variante, installé un dispositif anti-retour.

D'autres caractéristiques et avantages de la présente invention apparaîtront plus clairement à la lecture de la description ci-après faite en référence aux dessins annexés dans lesquels,
- la figure 1 représente une vue schématique d'un dispositif de préparation en continu d'un mélange bitumineux selon l'invention ;
- la figure 2 représente une vue schématique d'une deuxième variante de dispositif de préparation en continu avec pré-mélange d'un mélange bitumineux selon l'invention ;
- la figure 3 représente une installation de fabrication en continu du même type mais dans une troisième variante ;
- la figure 4 montre une installation de préparation d'enrobés en discontinu selon l'invention ;
- la figure 5 représente le dispositif de décompactage et de transport pneumatique pour mettre en oeuvre les procédés de l'invention,
- la figure 6 illustre un mode de réalisation des pales du démotteur,
- et enfin, la figure 7 montre une boite mélangeuse utilisable dans l'installation de la figure 1 ou de la figure 4.

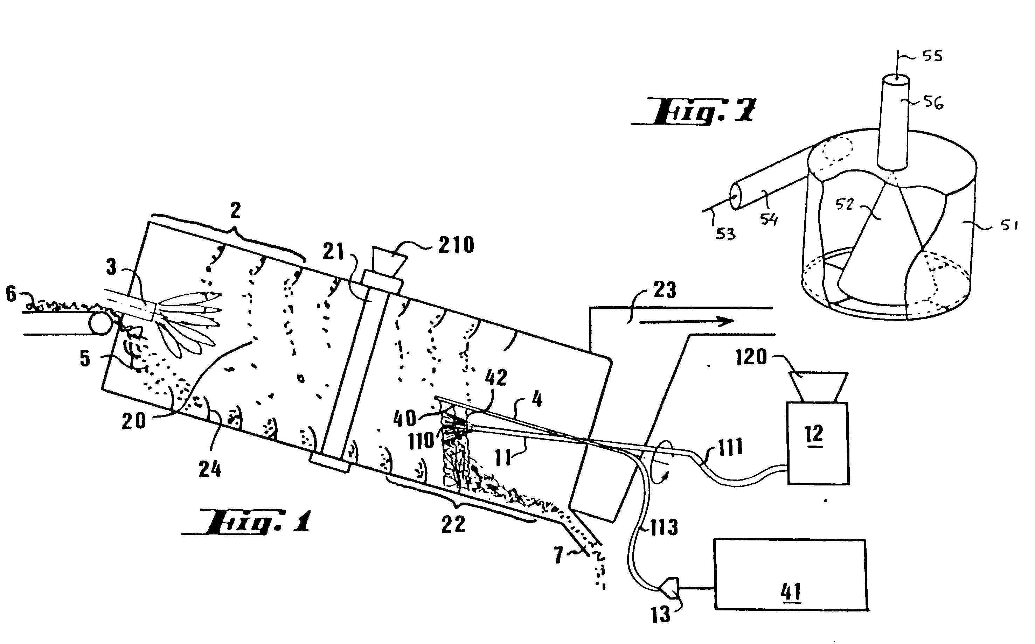

Le dispositif selon une première variante de l'invention représentée sur la figure 1 comporte un tambour sécheur enrobeur comportant une partie 2 dans laquelle les agrégats sont introduits par un tapis roulant 6. Ce tambour tournant 2 permet de sécher les inertes 5 et de les chauffer en faisant circuler, perpendiculairement à leur sens de déplacement lorsqu'ils tombent après avoir été entraînés vers la partie haute du tambour par des aubes 24, un courant gazeux chaud fourni par un brûleur 3. Les gaz chauds chargés de poussières sont évacués par une hotte 23 au travers d'un filtre pour récupérer les poussières avant évacuation des gaz par un ventilateur vers une cheminée. Le brûleur 3 est situé dans la zone axiale de la partie 2 du tambour sécheur enrobeur. En aval de la zone de flamme du brûleur 3 se trouve un rideau 20 d'inertes. Dans la zone d'enrobage 22 débouche un tube 4 terminé par des trous 40 d'amenée du bitume chaud liquide fourni par un réservoir 41 grâce à une pompe 13. Le dispositif est en général pourvu d'un anneau de recyclage 21 pour l''introduction d'enrobés de récupération par un entonnoir 210. Cet anneau 21 est situé en aval du brûleur et en amont du bec 40 d'amenée de bitume. Le bec 40 d'amenée de bitume permet à celui-ci de couler par les trous 40 en courants qui permettent une répartition homogène du bitume sur les inertes qui viennent en contact avec les courants 42 et se déplacent vers la trémie de sortie 7 pour ensuite, après un malaxage final, être élevés par une chaîne à godets non représentée vers un silo de stockage en attendant le passage des camions qui viennent effectuer leur prélèvement.

Selon l'invention, à proximité de la zone de répartition du bitume débouche également une buse 11 d'amenée de fibres. Cette buse 11 se termine par une extrémité permettant la diffusion des fibres sous forme d'un jet 110 qui vient intersecter les courants 42 de bitume de façon à ce que l'association bitume-fibres s'effectue avant tout contact avec les inertes 5. Le tuyau de transfert des fibres 111 est de section relativement importante, ce qui permet une bonne "dilution" des fibres dans le courant d'air et évite toute agglomération pendant leur entraînement à travers le tube d'alimentation vers la buse de projection. Le tuyau de transfert 111 provient d'un dispositif 12 de décompactage et de transport pneumatique des fibres dans un courant d'air tel que, par exemple, celui représenté par le dispositif du brevet français FR-A-2 557 817 permettant, grâce à une soufflante de véhiculer les fibres dans le tuyau 111. Ce tuyau peut être équipé d'un dispositif anti-retour non représenté. Il évite, lorsque l'introduction des fibres s'arrête, que des poussières, les "fines", contenues dans l'installation ne soient refoulées vers le dispositif 12.

Dans une variante du dispositif représenté figure 1, le mélange des fibres et du bitume liquide se fait dans une boite mélangeuse représentée figure 7. Cette boite telle qu'elle est décrite dans le brevet US-A-4 211 490 est un cylindre 51 à axe vertical dont le diamètre et la hauteur sont tous deux d'environ 50 cm. La boite qui ne possède pas de fond en partie inférieure, comporte un cône coaxial 52 lié rigidement aux parois de la boite. Les matériaux fibreux arrivent en 53 par un conduit 54 avec un diamètre par exemple compris entre 80 et 120 mm, ce conduit est relié au conduit 111 d'amenée de fibres. Les fibres pénètrent tangentiellement en partie haute. Le bitume arrive en 55 dans l'axe du cône 52 grâce à une conduite 56 reliée au conduit d'amenée de bitume 113.

Dans le cas des fibres minérales, celles-ci seront avantageusement préparées sous forme de nodules, en particulier selon la technique de préparation des nodules décrite dans la demande de brevet européen EP-A-0 455 553. Elle permet la transformation de la nappe de fibres minérales ensimées en nodules prêts à être incorporés dans le bitume. Ils sont alors mélangés dans une proportion pondérale comprise entre 0,5 et 20% par rapport au bitume. Ces nodules sont constitués de fibres minérales ayant un micronaire avant tout traitement chimique ou mécanique mesuré selon les normes DIN 53941 ou ASTM.D. 1448 qui soit au plus égal à 7 sous 5 grammes. Les fibres sont broyées et découpées par les lames du dispositif de façon à ce que 75% aient une longueur inférieure à 500 microns puis elles sont transformées en nodules qui permettront de faciliter l'introduction et la dispersion des fibres dans le bitume.

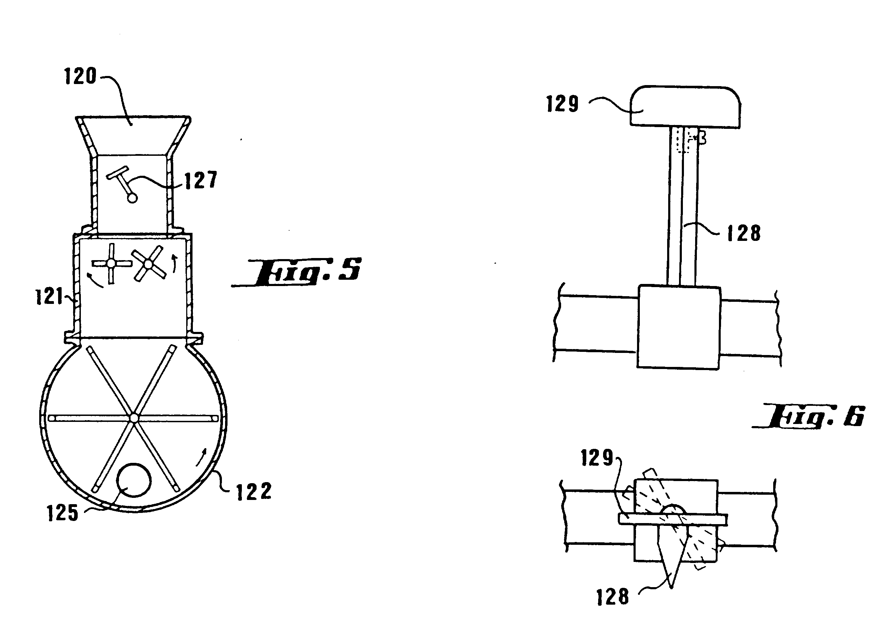

Le dispositif de décompactage et de transport pneumatique 12 est alimenté par une trémie 120 avec les fibres et permet d'obtenir ainsi, après mélange avec le bitume, sans manutention, un mélange bitumineux ayant les propriétés requises. Le dispositif 12 tel que celui décrit dans le brevet français FR-A-2 557 817 est représenté à la figure 5. Il comporte essentiellement un démotteur 127 précédant une cardeuse 121 qui alimente une vanne à écluses 122 et il comporte une turbine à débit contrôlé non représentée qui fournit à l'orifice 125 l'air nécessaire au transfert des fibres.

Les matériaux fibreux peuvent être introduits en vrac par exemple grâce à un silo situé au-dessus du dispositif 12. Cette disposition peut présenter un intérêt dans le cas d'installations fixes ou peu mobiles mais dans la majorité des cas, on approvisionnera le démotteur 127 avec des sacs remplis de nodules compactés à base de fibres minérales spéciales. Dans les sacs, l'imbrication des nodules comprimés est importante et c'est pourquoi on a trouvé utile de remplacer les pales du démotteur 127 par deux éléments originaux, d'une part un bras tranchant 128 qui sert de couteau et est capable de couper les agglomérats de nodules grâce à son tranchant orienté dans le plan de sa trajectoire, et d'autre part, à l'extrémité du couteau, un doigt symétrique 129 perpendiculaire au bras qui peut prendre différentes orientations dans son plan de manière à soit repousser les nodules vers la sortie du démotteur 127 et les diriger vers la cardeuse 121 soit au contraire maintenir la fibre dans la zone de démottage le temps suffisant pour que les nodules se séparent les uns des autres.

Des proportions variées entre les fibres et le bitume sont obtenues par des réglages indépendants les uns des autres sur la vitesse de rotation du démotteur 127, la vitesse de rotation de la cardeuse 121, la vitesse de rotation de la vanne à écluses 122 ainsi que le débit d'air en fonction du débit de la pompe à bitume 13.

Un tel dispositif permet de mettre en contact les fibres avec le bitume afin d'éviter un mélange à sec des inertes et des fibres. En effet, les dispositifs de l'art antérieur prévoyaient souvent d'effectuer un pré-mélange des inertes avec les fibres, à sec avant de mélanger l'ensemble avec le bitume liquide, ce qui de ce fait provoquait une détérioration des fibres et leur usure entraînant la nécessité d'augmenter la quantité de fibres pour obtenir les mêmes caractéristiques physiques dans le produit final. Dans la technique de production en continu, telle qu'enseignée par le brevet français FR-A-2 625 758, les matériaux fibreux tels qu'amiante ou cellulose étaient amenés sous forme de sacs introduits individuellement dans l'anneau de récyclage 21 en amont du dispositif de projection du bitume, par la trémie 210. Les matériaux fibreux venaient donc se déposer sur les inertes chauffés avec lesquels ils étaient malaxés à sec jusqu'à l'introduction du bitume. Cette technique nécessite une main-d'oeuvre importante et de plus, la dispersion des matériaux fibreux était le plus souvent mauvaise : des agglomérats de fibres se trouvant enduits de bitume extérieurement avant d'avoir pu être dispersés. En revanche, la méthode de l'invention permet une excellente dispersion même lorsque les nodules de fibres minérales ont été compactés dans des sacs jusqu'à des masses spécifiques de 150 Kg/m³.

Un dispositif tel que celui qu'on vient de décrire permet, par exemple, de travailler 260 tonnes de produit inertes à l'heure en les mélangeant à 15 tonnes de bitume 60/70 et 900 kilos de nodules de fibres de laine minérale produits selon le procédé de la demande de brevet européen EP-A-0 455 553. Ceci permet de produire environ 276 tonnes à l'heure d'enrobé drainant tout en diminuant la consommation de produit fibreux par exemple dans un rapport de 3 par rapport à l'amiante introduit de manière traditionnelle, tout en économisant la main-d'oeuvre nécessaire à l'introduction.

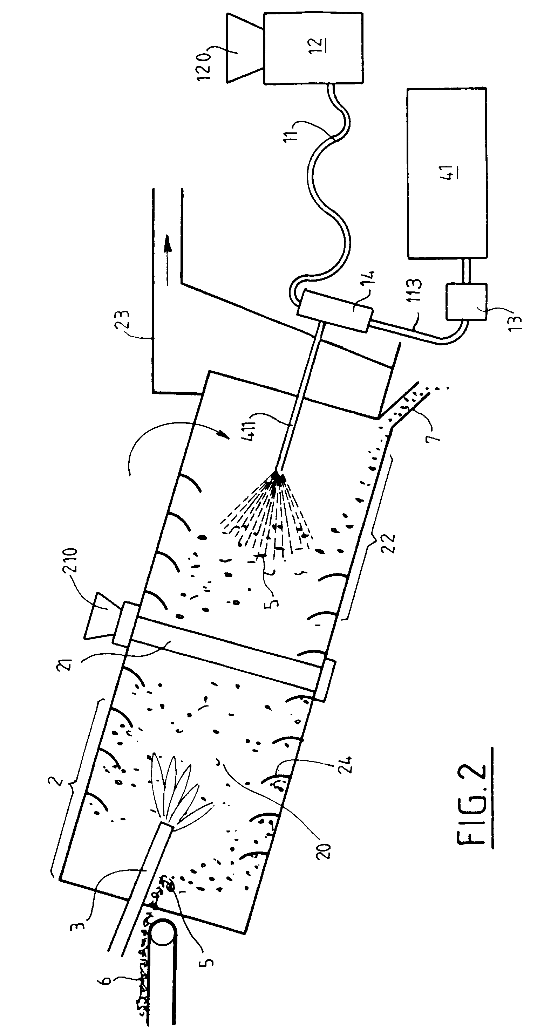

Une deuxième variante de réalisation qui concerne toujours la technique en continu est représentée à la figure 2 dans laquelle les mêmes éléments portent les mêmes références. Le dispositif comporte une seule canalisation 411 de transport d'un pré-mélange bitume liquide-fibres effectué dans un mélangeur réchauffeur indépendant 14 recevant d'un côté le bitume provenant de la pompe 13 et de l'autre côté les fibres venant par la canalisation 11 du dispositif de décompactage et de transport pneumatique 12.

La deuxième variante présente l'avantage d'être plus simple d'emploi car elle ne nécessite pas de réglage. Cette variante évite également comme la technique utilisant la boite mélangeuse dans la première variante, les risques d'aspiration des fibres vers la cheminée.

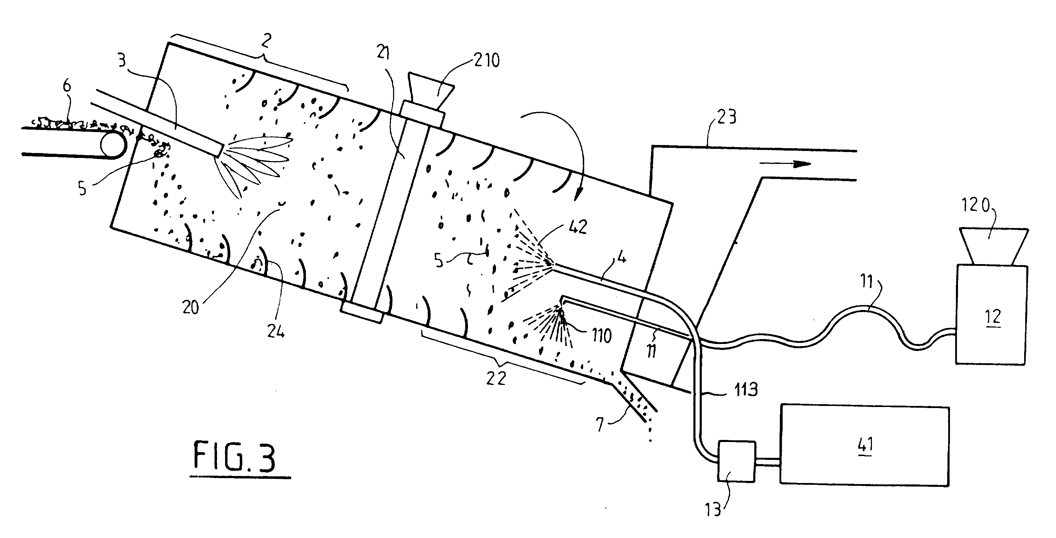

Selon une autre variante du procédé, les fibres sont apportées à la fin du mélange bitume-inertes, juste avant le dernier malaxage avant la sortie du tambour tournant. Cette autre variante du procédé est mise en oeuvre par une installation représentée à la figure 3 dont les éléments identiques à l'installation de figure 1 portent les mêmes références et dont la seule différence consiste en ce que la buse 4 de distribution de bitume est située en amont de la buse 11 de projection des fibres. La buse 11 de projection des fibres est orientée de façon que la projection se produise selon une direction radiale par rapport à l'axe de rotation de l'installation tandis que la buse de distribution du bitume est orientée de façon que la distribution se produise en amont.

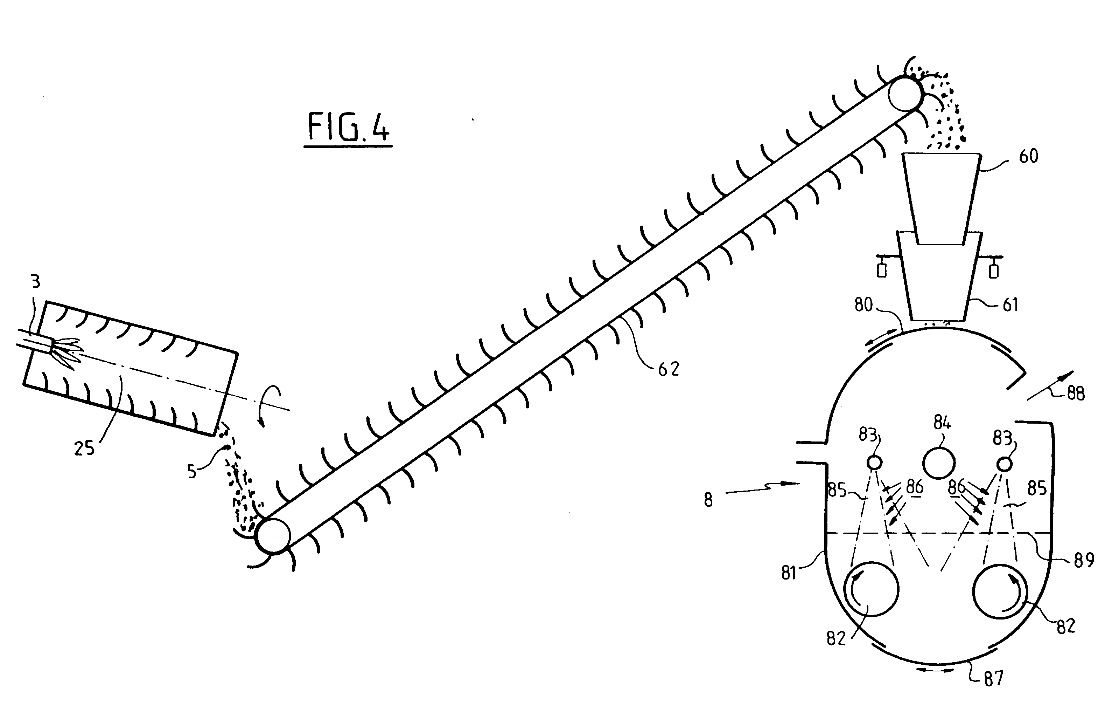

Une variante de réalisation d'installation de production en discontinu d'enrobé bitumineux chargé de matériau fibreux est représentée à la figure 4 dans laquelle un tambour sécheur 25 est entraîné en rotation selon un axe incliné et comporte un brûleur 3 dans sa partie amont par laquelle les inertes sont introduits pour être séchés et chauffés et ensuite déposés sur un transporteur 62 qui les emmène vers une trémie tampon 60 laquelle alimente une trémie peseuse 61 située au-dessus du malaxeur 8. Le malaxeur 8 comporte des bras mélangeurs à axes horizontaux 82 et une entrée 80 située à sa partie supérieure pour les inertes 5. Une sortie 87 est située à la partie inférieure du malaxeur pour délivrer l'enrobé dont le niveau supérieur est représenté par la ligne en pointillés 89. Le bitume est introduit au-dessus des deux bras mélangeurs 82 par deux rampes 83. Un distributeur 84 situé au même niveau et entre les deux rampes 83 permet la distribution des fibres selon des jets 86.

Le dispositif ainsi décrit fonctionne selon le processus suivant. Une fois la quantité d'inertes voulue introduite, le mélange sec est commencé puis trois variantes de fonctionnement sont possibles. Selon une première variante, on introduit simultanément le bitume liquide par les rampes 83 pour émettre des jets 85 de bitume et en même temps le distributeur 84 émet les jets 86 de fibre. Dans ces conditions, le bitume vient au contact des fibres avant le contact avec les inertes.

Une variante de ce premier mode de fonctionnement consiste à utiliser la boîte mélangeuse de la figure 7 pour réaliser un mélange homogène des fibres et du bitume.

Selon un deuxième mode de fonctionnement, on introduit d'abord le bitume seul par les rampes 83, on mélange le bitume avec les inertes 5 et on termine le processus mettant en contact les fibres avec le bitume.

Dans une troisième variante du procédé d'enrobage discontinu, on peut utiliser un dispositif tel que celui décrit à la figure 2, référence 14 pour effectuer un pré-mélange bitume-fibres et dans ce dernier cas, on ne met en oeuvre que les rampes 83 de la figure 4 pour introduire le liant, le dispositif 84 devenant inutile.

Dans toutes les variantes décrites, la machine d'approvisionnement en fibres est identique à celle décrite en liaison avec la figure 5. La machine 12 permet la maîtrise des réglages des débits pondéraux de fibres. En continu, elle assure une amenée constante de fibres. En discontinu, à l'intérieur de séquences, elle permet de délivrer de façon continue les fibres, ce qui facilite leur dispersion dans le bitume.

Dans le cadre des revendications, d'autres modifications de la machine d'approvisionnement en fibres à la portée de l'homme de métier qui lui conservent ces caractéristiques font également partie de l'invention.

## Revendications

1. Procédé de préparation d'enrobés bitumineux par mélange de bitume, de fibres et de matériaux inertes dans lequel les fibres sont des fibres minérales à l'état divisé introduites dans du bitume liquide, **caractérisé en ce que** le bitume liquide est amené en un flux continu **et en ce que** les fibres minérales sont également amenées en un flux continu à débit contrôlé pour se mélanger au bitume liquide.

2. Procédé selon la revendication 1, **caractérisé en ce que** les fibres minérales sont sous forme de nodules **et en ce que** les nodules sont transportés pneumatiquement.

3. Procédé selon la revendication 2, **caractérisé en ce que** les fibres minérales sont fabriquées avec un micronaire au plus égal à 7 sous 5 grammes et ensimées avec un apprêt non-ionique **et en ce que** les nodules sont formés par passage des fibres dans une plaque à trous de 6 à 10 mm de dimension moyenne de manière à obtenir au moins 75 % des fibres avec une longueur inférieure à 0,5 mm.

4. Procédé selon la revendication 3, **caractérisé en ce que** l'ensimage est à base d'oxyde d'amine d'un acide gras et en particulier d'oxyde de diméthyl-alkylamine.

5. Dispositif pour mettre en oeuvre le procédé de préparation d'enrobés bitumineux selon la revendication 1, comportant un tambour tournant (2, 25) avec un brûleur (3) et un dispositif (40, 56, 83) de distribution de bitume liquide, **caractérisé en ce que** le dispositif (40 ,56 ,83) de distribution de bitume liquide est à flux continu **et en ce qu**'il comporte également un dispositif (11 ,54, 84) de distribution de fibres, en flux continu et à débit contrôlé, les deux dispositifs de distribution débouchant dans une zone commune de manière que leurs flux (42, 55, 85 ; 110, 53, 86) s'intersectent.

6. Dispositif selon la revendication 5, **caractérisé en ce que** le dispositif de distribution (11, 84) de matériau fibreux est alimenté par un dispositif de décompactage de dosage et de transport pneumatique (12) assurant la maîtrise du débit de matériau fibreux.

7. Dispositif selon la revendication 6, **caractérisé en ce que** le dispositif de décompactage, de dosage et de transport pneumatique (12) comporte un dispositif démotteur (127), une cardeuse (121), un doseur volumétrique (122) et une source d'air sous pression.

8. Dispositif selon la revendication 7, **caractérisé en ce que** le dispositif démotteur (127) comporte des pales avec un bras tranchant (128).

9. Dispositif selon la revendication 7 ou 8, **caractérisé en ce que** le dispositif démotteur (127) comporte des pales équipées à leur extrémité d'un doigt perpendiculaire orientable (129).

10. Dispositif selon la revendication 7, **caractérisé en ce que** les éléments constitutifs du dispositif de décompactage ont des vitesses réglables indépendamment.

11. Dispositif selon l'une des revendications 7 à 10, **caractérisé en ce que** le tuyau de transfert de matériau fibreux (111) possède un dispositif anti-retour placé de préférence à la sortie du dispositif (12).

## Patentansprüche

1. Verfahren zur Herstellung von Asphalt-Mischgut durch Mischen von Asphalt, Fasern und inerten Materialien, bei dem die Fasern Mineralfasern sind, welche im getrennten Zustand in flüssigen Asphalt eingebracht werden, **dadurch gekennzeichnet, daß** der flüssige Asphalt als kontinuierlicher Fluß zugeführt wird, sowie dadurch, daß die Mineralfasern ebenfalls als kontinuierlicher Fluß mit kontrolliertem Durchsatz zugeführt werden, um mit dem flüssigen Asphalt vermischt zu werden.

2. Verfahren nach Anspruch 1, **dadurch gekennzeichnet daß**, die Mineralfasern die Form von Knäueln haben **und daß** die Knäuel pneumatisch gefördert werden.

3. Verfahren nach Anspruch 2, **dadurch gekennzeichnet daß** , die Mineralfasern mit einem Micronaire von höchstens 7/5 g hergestellt und mit einem nicht-ionischen Appreturmittel geschlichtet sind, **sowie dadurch, daß** die Knäuel mittels Durchgang der Fasern durch eine Platte mit Löchern einer mittleren Größe von 6 bis 10 mm gebildet sind, so daß mindestens 75% der Fasern mit einer Länge von weniger als 0,5 mm hergestellt sind.

4. Verfahren nach Anspruch 3, **dadurch gekennzeichnet, daß** die Schlichte auf der Basis eines Fettsäureaminoxids und insbesondere auf der Basis von Dimethylalkylaminoxid ist.

5. Vorrichtung zur Durchführung des Verfahrens zur Herstellung von Asphalt-Mischgut gemäß Anspruch 1, welche aufweist: eine Drehtrommel (2, 25) mit einem Brenner (3) und einer Einrichtung (40, 56, 83) für die Zuführung von flüssigem Asphalt, **dadurch gekennzeichnet, daß** die Einrichtung (40, 56, 83) für die Zuführung von flüssigem Asphalt mit kontinuierlichem Fluß arbeitet, **sowie dadurch daß**, sie auch eine Einrichtung (11, 54, 84) für die Zuführung von Fasern in einem kontinierlichen Fluß und mit kontrolliertem Durchsatz aufweist, wobei die beiden Zuführeinrichtungen derart in eine gemeinsame Zone münden, daß sich ihre Flüsse (42, 55, 85; 110, 53, 86) kreuzen.

6. Vorrichtung nach Anspruch 5, **dadurch gekennzeichnet daß**, die Einrichtung (11, 84) für die Zuführung von Fasermaterial durch eine Einrichtung (12) zum Aufschließen, Dosieren und pneumatischen Fördern versorgt wird, welche die Steuerung des Fasermaterial-Durchsatzes ermöglicht.

7. Vorrichtung nach Anspruch 6, **dadurch gekennzeichnet**, daß die Einrichtung (12) zum Aufschließen, Dosieren und pneumatischen Fördern eine Klumpenbrecheinrichtung (127), eine Kardiereinrichtung (121), eine volumetrische Dosiereinrichtung (122) und eine Druckluftquelle aufweist.

8. Vorrichtung nach Anspruch 7, **dadurch gekennzeichnet**, daß die Klumpenbrecheinrichtunq (127) Flügel mit einem Schneidarm (128) aufweist.

9. Vorrichtung nach Anspruch 7 oder 8, **dadurch gekennzeichnet, daß** die Klumpenbrecheinrichtunq (127) Flügel aufweist, welche an ihrem Ende mit einem dazu senkrechten, drehbaren Finger (129) versehen sind.

10. Vorrichtung nach Anspruch 7, **dadurch gekennzeichnet**, daß die Funktionselemente, aus denen die Aufschließeinrichtung zusammengesetzt ist, voneinander unabhängig einstellbare Geschwindigkeiten haben.

11. Vorrichtung nach einem der Ansprüche 7 bis 10, **dadurch gekennzeichnet daß**, der Schlauch bzw. die Leitung (111) zum Fördern von Fasermaterial eine Rückstauverhinderungseinrichtung aufweist, die vorzugsweise am Ausgang der Einrichtung (12) angeordnet ist.

## Claims

1. Process for the preparation of butiminous mixes by mixing bitumen, fibres and inert materials, in which the fibres are mineral fibres in the divided state introduced into the liquid bitumen, characterized in that the liquid bitumen is brought into a continuous flow and in that the mineral fibres are also brought into a continuous flow at a controlled flow rate for mixing with the liquid bitumen.

2. Process according to claim 1, characterized in that the mineral fibres are in the form of nodules and in that the nodules are transported pneumatically.

3. Process according to claim 2, characterized in that the mineral fibres are produced with a micronaire at the most equal to 7 under 5 grams and sized with a nonionic size and in that the nodules are formed by passing fibres into a perforated plate with holes having a mean size of 6 to 10 mm, so as to obtain at least 75% of the fibres with a length below 0.5 mm.

4. Process according to claim 3, characterized in that the size is based on the amine oxide of a fatty acid and in particular dimethyl alkyl amine oxide.

5. Apparatus for performing the process for the preparation of bituminous mixes according to claim 1, comprising a rotary drum (2, 25) with a burner (3) and a liquid bitumen distributing device (40, 56, 83), characterized in that the liquid bitumen distributing device (40, 56, 83) is of the continuous flow type and in that it also has a device (11, 54, 84) for the distribution of fibres in a continuous flow and at a controlled flow rate, the two distributing devices issuing into a common zone in such a way that their flows (42, 55, 85; 110, 53, 86) intersect.

6. Apparatus according to claim 5, characterized in that the fibrous material distributing device (11, 84) is supplied by a decompacting, proportioning and pneumatic transporting device (12) controlling the fibrous material flow rate.

7. Apparatus according to claim 6, characterized in that the decompacting, proportioning and pneumatic transportation device (12) has a delumping device (127), a carding device (121), a volumetric proportioner (122) and a pressurized air source.

8. Apparatus according to claim 7, characterized in that the delumping device (127) has blades with a cutting arm (128).

9. Apparatus according to claim 7 or 8, characterized in that the delumping device (127) has blades equipped at their end with an orientable, perpendicular finger (129).

10. Apparatus according to claim 7, characterized in that the components of the decompacting device have independently regulatable speeds.

11. Apparatus according to one of the claims 7 to 10, characterized in that the fibrous material transfer tube (111) has an anti-return device, preferably located at the outlet from the device (12).
